# EUROPÄISCHE PATENTSCHRIFT

(11) **EP 1 390 438 B1**
(45) Veröffentlichungstag und Bekanntmachung des Hinweises auf die Patenterteilung: **24.11.2004**
(21) Anmeldenummer: 02740549.7
(22) Anmeldetag: 02.05.2002
(51) Int. Cl.: C09K 5/20

(54) **GEFRIERSCHUTZMITTELKONZENTRATE ENTHALTEND DEN FARBSTOFF C.I. REACTIVE VIOLET 5**
ANTIFREEZE CONCENTRATE CONTAINING THE COLORANT C.I. REACTIVE VIOLET 5
CONCENTRES D'ANTIGEL CONTENANT LE COLORANT C.I. REACTIVE VIOLET 5

(30) Priorität: 10.05.2001 DE 10122769
(43) Veröffentlichungstag der Anmeldung: 25.02.2004
(73) Patentinhaber: BASF AKTIENGESELLSCHAFT, 67056 Ludwigshafen (DE)
(72) Erfinder: WENDEROTH, Bernd, 69488 Birkenau (DE); MESZAROS, Ladislaus, 67112 Mutterstadt (DE); NITZSCHKE, Uwe, 67071 Ludwigshafen (DE); DAMBACH, Stefan, 67454 Hassloch (DE)
(86) Internationale Anmeldenummer: PCT/EP2002/004784
(87) Internationale Veröffentlichungsnummer: WO 2002/090462

(56) Entgegenhaltungen:
- US-A- 5 725 794

## Beschreibung

Die vorliegende Erfindung betrifft neue Gefrierschutzmittelkonzentrate auf Basis von Alkylenglykolen oder deren Derivaten oder von Glycerin, enthaltend als Farbstoff Colour Index ("C.I.") Reactive Violet 5 (Colour Index No. 18097). Weiterhin betrifft die Erfindung gebrauchsfertige wäßrige Kühlmittelzusammensetzungen, welche die genannten Gefrierschutzmittelkonzentrate umfassen. Gegenstand der Erfindung ist auch die Verwendung dieser Gefrierschutzmittelkonzentrate zur Herstellung von wäßrigen Kühlmittelzusammensetzungen für Verbrennungsmotoren.

Gefrierschutzmittelkonzentrate für die Kühlkreisläufe von Verbrennungsmotoren, beispielsweise in Automobilen, enthalten meist Alkylenglykole, vor allem Ethylenglykol oder Propylenglykol, als Hauptkomponente. Zur Verwendung im Kühlsystem werden sie mit Wasser verdünnt und sollen neben Frostschutz auch für eine gute Wärmeabfuhr sorgen.

Alkylenglykol/Wasser-Mischungen sind bei den Betriebstemperaturen von Verbrennungsmotoren sehr korrosiv. Deswegen müssen die verschiedenen Metalle wie Stahl, Gußeisen, Kupfer, Messing, Aluminium, Magnesium und deren Legierungen sowie Lötmetalle wie beispielsweise Lötzinn, die im Kühlsystem vorkommen können, durch die Verwendung von Korrosionsinhibitoren ausreichend vor den verschiedensten Korrosionsarten, z. B. Lochfraßkorrosion, Spaltkorrosion, Erosion oder Kavitation, geschützt werden.

Gefrierschutzmittelkonzentrate und Kühlerschutzmittel werden zur Vermeidung von Verwechslungen mit anderen Betriebstoffen von Kraftfahrzeugen, wie zum Beispiel Scheibenwaschflüssigkeiten oder Bremsflüssigkeiten, fast immer durch Zugabe eines Farbstoffes eingefärbt. Die Einfärbung soll auch noch während und nach dem Gebrauch im Kühlsystem erkennbar sein.

Kühlerschutzmittel sind in der Praxis extremen Temperaturen und stark oxidierenden Bedingungen ausgesetzt. Es wurden nur sehr wenige Farbstoffe gefunden, die in einer solchen Umgebung stabil sind. Kommerziell werden hauptsächlich C.I. Direct Blue 199 (C.I. 74190), C.I. Direct Blue 86 (C.I. 74180), C.I. Acid Green 25 (C.I. 61570), C.I. Acid Yellow 73 (C.I. 45350) und Uranin (Natriumfluoreszein) eingesetzt. C.I. Acid Green 25 wird in der Regel mit C.I. Acid Yellow 73 oder mit Uranin kombiniert, wodurch eine fluoreszierend grüne Farbe erhalten wird. Als Gelbfarbstoff wird häufig auch C.I. Acid Yellow 221 und als Rotfarbstoff C.I. Basic Violet 10 (C.I. 45170) verwendet.

In der Schrift US-A 5 723 060 (1) werden blaue Farbstoffe mit einer 1-Amino-4-anilino-anthrachinon-Struktur als Einfärbungsmittel für Kühlmittelzusaramensetzungen beschrieben.

Die Schrift US-A 5 725 794 (2) empfiehlt Kühlmittelzusammensetzungen, welche polyoxyalkylen-substituierte Reaktivfarbstoffe enthalten, die durch den Polymersubstituenten eine verbesserte thermische Stabilität aufweisen sollen; beispielsweise werden Reaktivfarbstoffe wie C.I. Basic Violet 3 oder C.I. Reactive Violet 5 in einer chemischen Reaktion gezielt mit Polyoxyalkylenaminen oder mit Polyoxyethylen-dimethylsiloxan-Copolymeren umgesetzt. In der Schrift EP-B 864 616 (3) wird ebenfalls eine Umsetzung solcher Reaktivfarbstoffe mit Polyoxyethylen-dimethylsiloxan-Copolymeren und deren Einsatz in Kühlmittelzusammensetzungen gelehrt. Nachteilig ist bei den Lehren von (2) und (3) insbesondere im Vergleich zu den unsubstituierten Reaktivfarbstoffen der zusätzliche Syntheseschritt und die nicht kommerzielle Verfügbarkeit solcher Farbstoffe.

Nachteilig aus Sicht der Automobilindustrie ist bei vielen der in Kühlerschutzmitteln eingesetzten Farbstoffen, daß sie durch die geringe, zur Schmierung der Wasserpumpe gewollte Soll-Leckage auf der äußeren Metalloberfläche der Wasserpumpe farbige Rückstände aus dem ausgetretenen Kühlmittel bilden, deren Auftreten Rostbildung vortäuschen kann oder fälschlicherweise auf defekte oder zersetzte Pumpendichtungen zurückgeführt wird und deshalb zu unberechtigten Kundenreklamationen führt.

Es besteht somit ein Bedarf an thermostabilen Farbstoffen, die an undichten Stellen des Kühlsystems nach dem Eintrocknen keine farbigen sondern höchstens farblose Rückstände auf Metalloberflächen bilden.

Überraschenderweise wurde nun gefunden, daß der unsubstituierte Reaktivfarbstoff C.I. Reactive Violet 5 (Colour Index No. 18097) in Kühlmitteln nicht nur eine ausgezeichnete thermische Stabilität aufweist, sondern auch im Gegensatz zu anderen in Kühlmitteln eingesetzten Farbstoffen an Undichtigkeiten im Kühlsystem keine farbigen Rückstände auf Metalloberflächen hinterlässt.

Gegenstand der vorliegenden Erfindung sind somit Gefrierschutzmittelkonzentrate auf Basis von Alkylenglykolen oder deren Derivaten oder von Glycerin, enthaltend 0,0005 bis 0,1 Gew.-%, vorzugsweise 0,001 bis 0,05 Gew.-%, insbesondere 0,002 bis 0,02 Gew.-%, des Farbstoffes C.I. Reactive Violet 5 (Colour Index No. 18097), bezogen auf die Gesamtmenge des Konzentrates.

C.I. Reactive Violet 5 (Colour Index No. 18097) ist der Kupfer-Komplex von 5-(Acetylamino-)-4-hydroxy-3-[[2-hydroxy-4-[[2-(sulfooxy)-ethyl] sulfonyl] phenyl] azo] -2,7-naphthalindisulfonsäure. Seine CAS Registry Number ist 12226-38-9.

Der Farbstoff C.I. Reactive Violet 5 wird in das Gefrierschutzschutzmittelkonzentrat in nicht derivatisierter Form, d.h. so wie er im Handel erhältlich ist, eingearbeitet. Die Einarbeitung geschieht derart, daß chemische Reaktionen mit Bestandteilen des Gefrierschutzschutzmittelkonzentrates - zumindest vor dem Einfüllen in das Kühlsystem - auszuschließen sind.

Gegenstand der vorliegenden Erfindung ist daher auch ein Verfahren zur Herstellung von Gefrierschutzmittelkonzentraten, welches dadurch gekennzeichnet ist, daß man den Farbstoff C.I. Reactive Violet 5 (Colour Index No. 18097) in einer Menge von 0,0005 bis 0,1 Gew.-%, vorzugsweise 0,001 bis 0,05 Gew.-%, insbesondere 0,002 bis 0,02 Gew.-%, bezogen auf die Gesamtmenge des Konzentrates, in Gefrierschutzmittelkonzentrate auf Basis von Alkylenglykolen oder deren Derivaten oder von Glycerin einarbeitet. Die Einarbeitung geschieht üblicherweise vor dem Erzeugen der gebrauchsfertigen wäßrigen Kühlmittelzusammensetzungen aus den Konzentraten oder vor dem Einfüllen der gebrauchsfertigen wäßrigen Kühlmittelzusammensetzungen in das Kühlsystem.

In einer bevorzugten Ausführungsform enthalten die erfindungsgemäßen Gefrierschutzmittelkonzentrate zusätzlich zum Farbstoff nachfolgend aufgeführte Verbindungen
a) 0,05 bis 5 Gew.-%, bezogen auf die Gesamtmenge des Konzentrates, einer oder mehrerer aliphatischer, cycloaliphatischer oder aromatischer Monocarbonsäuren mit jeweils 3 bis 16 C-Atomen in Form deren Alkalimetall-, Ammonium- oder substituierten Ammoniumsalze und/oder
b) 0,05 bis 5 Gew.-%, bezogen auf die Gesamtmenge des Konzentrates, einer oder mehrerer aliphatischer oder aromatischer Di- oder Tricarbonsäuren mit jeweils 3 bis 21 C-Atomen in Form deren Alkalimetall-, Ammonium- oder substituierter Ammoniumsalze und/oder
c) eines oder mehrerer Alkalimetallborate, Alkalimetallphosphate, Alkalimetallsilikate, Alkalimetallnitrite, Alkali- oder Erdalkalimetallnitrate, Alkalimetallmolybdate oder Alkali- oder Erdalkalimetallfluoride in Mengen von jeweils bis zu 1 Gew.-%, bezogen auf die Gesamtmenge des Konzentrates, und/oder
d) 0,05 bis 5 Gew.-%, bezogen auf die Gesamtmenge des Konzentrates, eines oder mehrerer aliphatischer, cycloaliphatischer oder aromatischer Amine mit 2 bis 15 C-Atomen, welche zusätzlich Ethersauerstoffatome oder Hydroxylgruppen enthalten können, und/oder
e) 0,05 bis 5 Gew.-%, bezogen auf die Gesamtmenge des Konzentrates, eines oder mehrerer ein- oder zweikerniger ungesättigter oder teilungesättigter Heterocyclen mit 4 bis 10 C-Atomen, welche benzanelliert sein und/oder zusätzliche funktionelle Gruppen tragen können, und/oder
f) 05 bis 5 Gew.-% eines oder mehrerer Tetra-(C₁-C₈-alkoxy)-silane (Orthokieselsäure-tetra-C₁-C₈-alkylester), bezogen auf die Gesamtmenge des Konzentrates, und/oder
g) 0,05 bis 10 Gew.-%, bezogen auf die Gesamtmenge des Konzentrates, eines oder mehrerer Carbonsäureamide und/oder Sulfonsäureamide, und/oder
h) bis zu 1 Gew.-%, bezogen auf die Gesamtmenge des Konzentrates, eines oder mehrerer Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

Bei den Verbindungen der Gruppen a) bis g) handelt es sich in der Regel um Korrosionsinhibitoren.

Als lineare oder verzweigtkettige aliphatische oder cycloaliphatische Monocarbonsäuren a) kommen beispielsweise Propionsäure, Pentansäure, Hexansäure, Cyclohexylessigsäure, Octansäure, 2-Ethylhexansäure, Nonansäure, Isononansäure, Decansäure, Undecansäure oder Dodecansäure in Betracht. Als aromatische Monocarbonsäure a) eignet sich insbesondere Benzoesäure, daneben kommen auch beispielsweise C₁-bis C₈-Alkylbenzoesäuren wie o-, m-, p-Methylbenzoesäure oder p-tert.-Butylbenzoesäure sowie hydroxylgruppenhaltige aromatische Monocarbonsäuren wie o-, m- oder p-Hydroxybenzoesäure, o-, m- oder p-(Hydroxymethyl)benzoesäure oder Halogenbenzoesäuren wie o-, m- oder p-Fluorbenzoesäure in Betracht.

Typische Beispiele für Di- oder Tricarbonsäuren b) sind Malonsäure, Bernsteinsäure, Glutarsäure, Adipinsäure, Pimelinsäure, Korksäure, Azelainsäure, Sebacinsäure, Undecandisäure, Dodecandisäure, Dicyclopentadiendicarbonsäure, Phthalsäure, Terephthalsäure und Triazin-triiminocarbonsäuren wie 6,6',6''-(1,3,5-Triazin-2,4,6-triyltriimino)-trihexansäure.

Alle genannten Carbonsäuren der Gruppen a) und b) liegen als Alkalimetallsalze, vor allem als Natrium- oder Kaliumsalze, oder als Ammoniumsalze oder substituierte Ammoniumsalze (Aminsalze) vor, z. B. mit Ammoniak, Trialkylaminen oder Trialkanolaminen.

Typische Beispiele für unter c) genannte Korrosionsinhibitoren sind Natriumtetraborat (Borax), Dinatriumhydrogenphosphat, Trinatriumphosphat, Natriummetasilikat, Natriumnitrit, Natriumnitrat, Magnesiumnitrat, Natriumfluorid, Kaliumfluorid, Magnesiumfluorid und Natriummolybdat.

Bei Mitverwendung von Alkalimetallsilikaten werden diese zweckmäßigerweise durch übliche Organosilicophosphonate oder Organosilicosulfonate in üblichen Mengen stabilisiert.

Als aliphatische, cycloaliphatische oder aromatische Amine d) mit 2 bis 15, vorzugsweise 4 bis 8 C-Atomen, welche zusätzlich Ethersauerstoffatome, insbesondere 1 bis 3 Ethersauerstoffatome, oder Hydroxylgruppen, insbesondere 1 bis 3 Hydroxylgruppen, enthalten können, kommen beispielsweise Ethylamin, Propylamin, Isopropylamin, n-Butylamin, Isobutylamin, sec.-Butylamin, tert.-Butylamin, n-Pentylamin, n-Hexylamin, n-Heptylamin, n-Octylamin, Isononylamin, Di-n-propylamin, Diisopropylamin, Di-n-butylamin, Mono-, Di- und Triethanolamin, Piperidin, Morpholin, Anilin oder Benzylamin in Frage. Aliphatische und cycloaliphatische Amine d) sind in der Regel gesättigt.

Bei den Heterocyclen e) handelt es sich beispielsweise um einkernige fünf- oder sechsgliedrige Systeme mit 1, 2 oder 3 Stickstoffatomen oder mit einem Stickstoffatom und einem Schwefelatom, welche benzanelliert sein können. Es können auch zweikernige Systeme aus fünf- und/oder sechsgliedrigen Teilringen mit typischerweise 2, 3, oder 4 Stickstoffatomen eingesetzt werden. Die Heterocyclen e) können zusätzlich funktionelle Gruppen, vorzugsweise C₁-C₄-Alkoxy, Amino und/oder Mercapto, tragen. Das heterocyclische Grundgerüst kann selbstverständlich auch Alkylgruppen, insbesondere C₁-C₄-Alkylgruppen, tragen.

Typische Beispiele für Heterocyclen e) sind Benzotriazol, Tolutriazol (Tolyltriazol), hydriertes Tolutriazol, 1H-1,2,4-Triazol, Benzimidazol, Benzthiazol, Adenin, Purin, 6-Methoxypurin, Indol, Isoindol, Isoindolin, Pyridin, Pyrimidin, 3,4-Diaminopyridin, 2-Aminopyrimidin und 2-Mercaptopyrimidin.

Für die Tetra-(C₁-C₈-alkoxy)-silane f) kommen beispielsweise Tetramethoxysilan, Tetraethoxysilan, Tetra-n-propoxysilan oder Tetra-n-butoxysilan in Frage.

Die Amide g) können gegebenenfalls am Stickstoffatom der Amidgruppe alkylsubstituiert sein, beispielsweise durch eine C₁-C₄-Alkylgruppe. Aromatische oder heteroaromatische Grundgerüste des Moleküls können selbstverständlich auch derartige Alkylgruppen tragen. Im Molekül können eine oder mehrere, vorzugsweise eine oder zwei Amidgruppen vorliegen. Die Amide können zusätzliche funktionelle Gruppen, vorzugsweise C₁-C₄-Alkoxy, Amino, Chlor, Fluor, Hydroxy und/oder Acetyl, tragen, insbesondere finden sich solche funktionelle Gruppen als Substituenten an vorhandenen aromatischen oder heteroaromatischen Ringen.

Typische Beispiele für derartige Carbonsäure- und Sulfonsäureamide der Gruppe g) sind in der DE-A 100 36 031 aufgeführt. Zusätzlich zu den genannten Inhibitorkomponenten der Gruppen a) bis g) können beispielsweise auch noch lösliche Salze des Magnesiums von organischen Säuren, z. B. Magnesiumbenzolsulfonat, Magnesiummethansulfonat, Magnesiumacetat oder Magnesiumpropionat, Hydrocarbazole oder quaternierte Imidazole, wie sie in der DE-A 196 05 509 beschrieben sind, in üblichen Mengen als weitere Inhibitoren eingesetzt werden.

Von den oben aufgeführten zusätzlichen Inhaltsstoffen der erfindungsgemäßen Gefrierschutzmittelkonzentrate werden vorzugsweise Carbonsäuren der Gruppen a) und/oder b) und/oder Heterocyclen der Gruppe e) mitverwendet. In einer besonders bevorzugten Ausführungsform enthalten die erfindungsgemäßen Gefrierschutzmittelkonzentrate zusätzlich zum Farbstoff jeweils 0,05 bis 5 Gew.-%, insbesondere 0,5 bis 3 Gew.-%, zweier voneinander verschiedener Carbonsäuren aus den Gruppen a) und/oder b) sowie 0,05 bis 5 Gew.-%, insbesondere 0,1 bis 0,5 Gew.-%, eines oder mehrerer Heterocyclen aus der Gruppe e).

Als derartige voneinander verschiedene Carbonsäuren können beispielsweise Mischungen aus einer aliphatischen Monocarbonsäure und einer aliphatischen Dicarbonsäure, aus einer aromatischen Monocarbonsäure und einer aliphatischen Dicarbonsäure, aus einer aliphatischen Monocarbonsäure und einer aromatischen Monocarbonsäure, aus zwei aliphatischen Monocarbonsäuren oder aus zwei aliphatischen Dicarbonsäuren eingesetzt werden. Als hierbei mitzuverwendende Heterocyclen eignen sich insbesondere Benzotriazol und Tolutriazol.

Der pH-Wert der erfindungsgemäßen Gefrierschutzmittelkonzentrate liegt üblicherweise im Bereich von 4 bis 11, vorzugsweise 4 bis 10, insbesondere 4,5 bis 8,5. Dabei kann der gewünschte pH-Wert gegebenenfalls auch durch Zugabe von Alkalimetallhydroxid, Ammoniak oder Aminen zur Formulierung eingestellt, festes Natrium- oder Kaliumhydroxid sowie wäßrige Natron- oder Kalilauge sind hierfür besonders geeignet. Mitzuverwendende Carbonsäuren werden zweckmäßigerweise gleich als entsprechende Alkalimetallsalze zugegeben, um automatisch im gewünschten pH-Bereich zu liegen. Man kann die Carbonsäuren jedoch auch als freie Säuren zufügen und dann mit Alkalimetallhydroxid, Ammoniak oder Aminen neutralisieren und den gewünschten pH-Bereich einstellen.

Als flüssigalkoholisches Gefrierpunktserniedrigungsmittel, welches normalerweise den Hauptbestandteil (in der Regel mindestens 75 Gew.-%, insbesondere mindestens 85 Gew.-%) der erfindungsgemäßen Gefrierschutzmittelkonzentrate ausmacht, eignen sich Alkylenglykole und deren Derivate sowie Glycerin, insbesondere Propylenglykol und vor allem Ethylenglykol. Daneben kommen jedoch auch noch höhere Glykole und Glykolether in Betracht, z. B. Diethylenglykol, Dipropylenglykol sowie Monoether von Glykolen wie der Methyl-, Ethyl-, Propyl- und Butylether von Ethylenglykol, Propylenglykol, Diethylenglykol und Dipropylenglykol. Es können auch Mischungen der genannten Glykole und Glykolether sowie Mischungen dieser Glykole mit Glycerin und gegebenenfalls diesen Glykolethern verwendet werden.

In einer bevorzugten Ausführungsform basieren die erfindungsgemäßen Gefrierschutzmittelkonzentrate auf Ethylenglykol oder Propylenglykol oder Mischungen von Alkylenglykolen oder von Glycerin mit Ethylenglykol bzw. Propylenglykol, die jeweils mindestens 95 Gew.-% Ethylenglykol und/oder Propylenglykol und/oder Glycerin enthalten.

Als weitere übliche Hilfsmittel können die erfindungsgemäßen Gefrierschutzmittel-konzentrate in üblichen geringen Mengen noch Entschäumer (in der Regel in Mengen von 0,003 bis 0,008 Gew.-%) sowie aus Gründen der Hygiene und der Sicherheit im Falle eines Verschluckens Bitterstoffe (z.B. vom Typ Denatoniumbenzoat) enthalten.

Gegenstand der vorliegenden Erfindung sind auch gebrauchsfertige wäßrige Kühlmittelzusammensetzungen mit einem erniedrigten Gefrierpunkt, insbesondere für den Kühlerschutz von Verbrennungsmotoren im Automobilbereich, welche Wasser und 10 bis 90 Gew.-%, insbesondere 20 bis 60 Gew.-% der erfindungsgemäßen Gefrierschutzmittelkonzentrate umfassen.

Die nachfolgenden Beispiele sollen die Erfindung erläutern, ohne sie jedoch darauf zu beschränken.

### Beispiele

Für die Versuche wurde ein handelsübliches Gefrierschutzmittelkonzentrat auf Basis von Ethylenglykol mit einer Mischung aus Adipinsäure, Sebacinsäure und Tolutriazol als Inhibitorkomponenten verwendet.

Durch Zugabe von 50 ppm des jeweiligen Farbstoffes zu diesem Konzentrat und gründliches Durchmischen wurden unterschiedlich eingefärbte Proben hergestellt.

Auf jeweils einer Aluminiumplatte (,Legierung GAlSi10Mg, Durchmesser 70 mm, Dicke 6 mm) wurde mit Hilfe einer Glaspipette jeweils 2 Tropfen nicht eingefärbtes Konzentrat, der erfindungsgemäßen Formulierung mit dem Farbstoff C.I. Reactive Violet 5 und der mit anderen Farbstoffen hergestellten Vergleichsproben aufgetragen. Jede Aluminiumplatte wurde auf eine elektrische Heizplatte (Gerät IKA-Combimag RCT, 600W, der Firma Janke & Kunkel /Staufen) gelegt und 5 Minuten aufgeheizt. Danach wurde jeweils der eingetrocknete Rückstand visuell beurteilt.
Die Ergebnisse im Heißplattentest sind in Tabelle 1 aufgeführt. Sie zeigen, daß bei der Verwendung des Farbstoffes C.I. Reactive Violet 5 wie beim ungefärbten Konzentrat ein weißer Rückstand auftrat, während in bei Verwendung anderer Farbstoffe nicht erwünschte farbige Rückstände auf der Metalloberfläche gebildet wurden.

Die Tabellen 2 und 3 zeigen die guten Ergebnisse einer erfindungemäßen Formulierung mit 50 ppm C.I. Reactive Violet 5 im Glässware Corrosion Test gemäß ASTM D 1384-97 und im Heat Transfer Corrosion Test gemäß ASTM D 4340. Durch die Tests konnte weiterhin aufgezeigt werden, daß der Farbstoff in der Formulierung auch bei Temperaturbelastung stabil war und keine Entfärbung des Kühlerschutzmittels beobachtet werden konnte.

**Tabelle 1**

| Heißplattentest | | | | |
|---|---|---|---|---|
| Farbstoff | C.I.-Nr. | CAS-Nr. | Dosierung [ppm] | Testergebnis |
| Ohne | --- | --- | --- | weißer Rückstand |
| C.I. Reactive Violet 5 | 18097 | 12226-38-9 | 50 | weißer Rückstand |
| C.I. Basic Violet 10 | 45170 | 81-88-9 | 50 | roter Rückstand |
| C.I. Acid Green 25 | 61570 | 4403-90-1 | 50 | hellgrüner Rückstand |
| C.I. Acid Yellow 221 | | 61814-59-3 | 50 | gelblicher Rückstand |
| C.I. Acid Yellow 73 | 45350 | 518-47-8 | 50 | Gelbbrauner Rückstand |
| C.I. Direct Blue 86 | 74180 | 1330-38-7 | 50 | Blaugrüner Rückstand |
| C.I. Basic Violet 1 | 42535 | 8004-87-3 | 50 | blauer Rückstand |
| C.I. Basic Violet 3 | 42555 | 548-62-9 | 50 | blauer Rückstand |

**Tabelle 2**

| Glassware Corrosion Test gemäß ASTM D 1384-97 Gefrierschutzmittelkonzentrat mit 50 ppm C.I. Reactive Violet 5; Konzentration: 33 Vol.-% | |
|---|---|
| Metall-Legierungen: | Gewichtsänderungen [mg/cm2] |
| Kupfer | + 0,03 |
| Weichlot | + 0,07 |
| Messing | + 0,03 |
| Stahl | + 0,03 |
| Grauguß | + 0,08 |
| Gußaluminium | - 0,02 |
| Aussehen Lösung vor Test: violett, klar | |
| Aussehen Lösung nach Test: violett, klar | |

**Tabelle 3**

| Heat Transfer Corrosion Test gemäß ASTM D 4340 Gefrierschutzmittelkonzentrat mit 50 ppm C.I. Reactive Violet 5; Konzentration: 25 Vol.-% | |
|---|---|
| Metall-Legierung: | Gewichtsänderung [mg/cm²/Woche] |
| Gußaluminium | + 0,36 |
| i) Aussehen Lösung vor Test: violett, klar | |
| j) Aussehen Lösung nach Test: violett, klar | |

## Patentansprüche

1. Gefrierschutzmittelkonzentrate auf Basis von Alkylenglykolen oder deren Derivaten oder von Glycerin, enthaltend 0,0005 bis 0,1 Gew.-% des Farbstoffes C.I. Reactive Violet 5 (Colour Index No. 18097), bezogen auf die Gesamtmenge des Konzentrates.

2. Gefrierschutzmittelkonzentrate nach Anspruch 1, enthaltend zusätzlich zum Farbstoff nachfolgend aufgeführte Verbindungen
a) 0,05 bis 5 Gew.-%, bezogen auf die Gesamtmenge des Konzentrates, einer oder mehrerer aliphatischer, cycloaliphatischer oder aromatischer Monocarbonsäuren mit jeweils 3 bis 16 C-Atomen in Form deren Alkalimetall-, Ammonium- oder substituierten Ammoniumsalze und/oder
b) 0,05 bis 5 Gew.-%, bezogen auf die Gesamtmenge des Konzentrates, einer oder mehrerer aliphatischer oder aromatischer Di- oder Tricarbonsäuren mit jeweils 3 bis 21 C-Atomen in Form deren Alkalimetall-, Ammonium- oder substituierter Ammoniumsalze und/oder
c) eines oder mehrerer Alkalimetallborate, Alkalimetallphosphate, Alkalimetallsilikate, Alkalimetallnitrite, Alkali- oder Erdalkalimetallnitrate, Alkalimetallmolybdate oder Alkali- oder Erdalkalimetallfluoride in Mengen von jeweils bis zu 1 Gew.-%, bezogen auf die Gesamtmenge des Konzentrates, und/oder
d) 0,05 bis 5 Gew.-%, bezogen auf die Gesamtmenge des Konzentrates, eines oder mehrerer aliphatischer, cycloaliphatischer oder aromatischer Amine mit 2 bis 15 C-Atomen, welche zusätzlich Ethersauerstoffatome oder Hydroxylgruppen enthalten können, und/oder
e) 0,05 bis 5 Gew.-%, bezogen auf die Gesamtmenge des Konzentrates, eines oder mehrerer ein- oder zweikerniger ungesättigter oder teilungesättigter Heterocyclen mit 4 bis 10 C-Atomen, welche benzanelliert sein und/oder zusätzliche funktionelle Gruppen tragen können, und/oder
f) 0,05 bis 5 Gew.-% eines oder mehrerer Tetra-(C₁-C₈-alkoxy)-silane (Orthokieselsäure-tetra-C₁-C₈-alkylester), bezogen auf die Gesamtmenge des Konzentrates, und/oder
g) 0,05 bis 10 Gew.-%, bezogen auf die Gesamtmenge des Konzentrates, eines oder mehrerer Carbonsäureamide und/oder Sulfonsäureamide, und/oder
h) bis zu 1 Gew.-%, bezogen auf die Gesamtmenge des Konzentrates, eines oder mehrerer Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

3. Gefrierschutzmittelkonzentrate nach Anspruch 2, enthaltend zusätzlich zum Farbstoff jeweils 0,05 bis 5 Gew.-% zweier voneinander verschiedener Carbonsäuren aus den Gruppen a) und/oder b) sowie 0,05 bis 5 Gew.-% eines oder mehrerer Heterocyclen aus der Gruppe e).

4. Gefrierschutzmittelkonzentrate nach den Ansprüchen 1 bis 3 mit einem pH-Wert im Bereich von 4 bis 11.

5. Gefrierschutzmittelkonzentrate nach den Ansprüchen 1 bis 4 auf der Basis von Ethylenglykol oder Propylenglykol oder Mischungen von Alkylenglykolen oder von Glycerin mit Ethylenglykol bzw. Propylenglykol, die jeweils mindestens 95 Gew.-% Ethylenglykol und/oder Propylenglykol und/oder Glycerin enthalten.

6. Verfahren zur Herstellung von Gefrierschutzmittelkonzentraten gemäß den Ansprüchen 1 bis 5, **dadurch gekennzeichnet, daß** man den Farbstoff C.I. Reactive Violet 5 (Colour Index No. 18097) in einer Menge von 0,0005 bis 0,1 Gew.-%, bezogen auf die Gesamtmenge des Konzentrates, in Gefrierschutzmittelkonzentrate auf Basis von Alkylenglykolen oder deren Derivaten oder von Glycerin einarbeitet.

7. Gebrauchsfertige wäßrige Kühlmittelzusammensetzungen mit einem erniedrigten Gefrierpunkt, welche Wasser und 10 bis 90 Gew.-% eines Gefrierschutzmittelkonzentrates gemäß den Ansprüchen 1 bis 5 umfassen.

8. Verwendung von Gefrierschutzmittelkonzentraten gemäß den Ansprüchen 1 bis 5 zur Herstellung von wäßrigen Kühlmittelzusammensetzungen für Verbrennungsmotoren.

## Claims

1. An antifreeze concentrate based on alkylene glycols or derivatives thereof or on glycerol, comprising from 0.0005 to 0.1% by weight of the dye C.I. Reactive Violet 5 (Colour Index No. 18097), based on the total amount of the concentrate.

2. An antifreeze concentrate as claimed in claim 1, comprising, in addition to the dye, the following compounds:
a) from 0.05 to 5% by weight, based on the total amount of the concentrate, of one or more aliphatic, cycloaliphatic or aromatic monocarboxylic acids, each having from 3 to 16 carbon atoms, in the form of their alkali metal, ammonium or substituted ammonium salts, and/or
b) from 0.05 to 5% by weight, based on the total amount of the concentrate, of one or more aliphatic or aromatic di- or tricarboxylic acids, each having from 3 to 21 carbon atoms, in the form of their alkali metal, ammonium or substituted ammonium salts, and/or
c) one or more alkali metal borates, alkali metal phosphates, alkali metal silicates, alkali metal nitrites, alkali or alkaline earth metal nitrates, alkali metal molybdates or alkali or alkaline earth metal fluorides, each in amounts of up to 1% by weight, based on the total amount of the concentrate, and/or
d) from 0.05 to 5% by weight, based on the total amount of the concentrate, of one or more aliphatic, cycloaliphatic or aromatic amines having from 2 to 15 carbon atoms, which may additionally contain ether oxygen atoms or hydroxyl groups, and/or
e) from 0.05 to 5% by weight, based on the total amount of the concentrate, of one or more monocyclic or bicyclic unsaturated or partially unsaturated heterocyclic compounds having from 4 to 10 carbon atoms, which may be benzo-fused and/or may carry additional functional groups, and/or
f) from 0.05 to 5% by weight, based on the total amount of the concentrate, of one or more tetra(C₁-C₈-alkoxy)silanes (tetra-C₁-C₈-alkyl orthosilicates), and/or
g) from 0.05 to 10% by weight, based on the total amount of the concentrate, of one or more carboxamides and/or sulfonamides, and/or
h) up to 1% by weight, based on the total amount of the concentrate, of one or more hard-water stabilizers based on polyacrylic acid, polymaleic acid, acrylic acid-maleic acid copolymers, polyvinylpyrrolidone, polyvinylimidazole, vinylpyrrolidone-vinylimidazole copolymers and/or copolymers of unsaturated carboxylic acids and olefins.

3. An antifreeze concentrate as claimed in claim 2, comprising, in addition to the dye, from 0.05 to 5% by weight of each of two carboxylic acids from groups a) and/or b) which are different from one another and from 0.05 to 5% by weight of one or more heterocyclic compounds from group e).

4. An antifreeze concentrate as claimed in any one of claims 1 to 3 having a pH in the range from 4 to 11.

5. An antifreeze concentrate as claimed in any one of claims 1 to 4 based on ethylene glycol or propylene glycol or mixtures of alkylene glycols or on glycerol with ethylene glycol or propylene glycol, in each case comprising at least 95% by weight of ethylene glycol and/or propylene glycol and/or glycerol.

6. A process for the preparation of an antifreeze concentrate as claimed in any one of claims 1 to 5, wherein the dye C.I. Reactive Violet 5 (Colour Index No. 18097) is incorporated in an amount of from 0.0005 to 0.1% by weight, based on the total amount of the concentrate, into an antifreeze concentrate based on alkylene glycols or derivatives thereof or on glycerol.

7. A ready-to-use aqueous coolant composition having a lowered freezing point which comprises water and from 10 to 90% by weight of an antifreeze concentrate as claimed in any one of claims 1 to 5.

8. The use of an antifreeze concentrate as claimed in any one of claims 1 to 5 for the preparation of aqueous coolant compositions for internal-combustion engines.

## Revendications

1. Concentrés d'antigel à base d'alkylèneglycols ou de leurs dérivés ou de glycérine, contenant 0,0005% à 0,1% en poids du colorant C.I. Reactive Violet 5 (Colour Index No. 18097) par rapport à la quantité totale du concentré.

2. Concentrés d'antigel selon la revendication 1, contenant en plus du colorant les composés indiqués ci-dessous
a) 0,05% à 5% en poids, par rapport à la quantité totale du concentré, d'un ou de plusieurs acides monocarboxyliques aliphatiques, cycloaliphatiques ou aromatiques possédant à chaque fois 3 à 16 atomes de C, sous la forme de leurs sels de métaux alcalins, d'ammonium ou d'ammonium substitué et/ou
b) 0,05% à 5% en poids, par rapport à la quantité totale du concentré, d'un ou de plusieurs acides di- ou tri-carboxyliques aliphatiques ou aromatiques possédant à chaque fois 3 à 21 atomes de C, sous la forme de leurs sels de métaux alcalins, d'ammonium ou d'ammonium substitué et/ou
c) un ou plusieurs borates de métaux alcalins, phosphates de métaux alcalins, silicates de métaux alcalins, nitrites de métaux alcalins, nitrates de métaux alcalins ou alcalino-terreux, molybdates de métaux alcalins ou fluorures de métaux alcalins ou alcalino-terreux, à chaque fois à raison de jusqu'à 1% en poids par rapport à la quantité totale du concentré, et/ou
d) 0,05% à 5% en poids, par rapport à la quantité totale du concentré, d'une ou de plusieurs amines aliphatiques, cycloaliphatiques ou aromatiques possédant 2 à 15 atomes de C, lesquelles peuvent contenir en outre des atomes d'oxygène éther ou des groupes hydroxyle, et/ou
e) 0,05% à 5% en poids, par rapport à la quantité totale du concentré, d'un ou de plusieurs hétérocycles mono- ou bi-nucléaires insaturés ou partiellement insaturés possédant 4 à 10 atomes de C, lesquels peuvent être benzocondensés et/ou peuvent porter des groupes fonctionnels supplémentaires, et/ou
f) 0,05% à 5% en poids d'un ou de plusieurs tétra(alcoxy en C₁ à C₈)silanes (esters tétraalkyliques en C₁ à C₈ de l'acide orthosilicique) par rapport à la quantité totale du concentré, et/ou
g) 0,05% à 5% en poids, par rapport à la quantité totale du concentré, d'un ou de plusieurs amides d'acide carboxylique et/ou amides d'acide sulfonique, et/ou
h) jusqu'à 1% en poids, par rapport à la quantité totale du concentré, d'un ou de plusieurs stabilisants pour l'eau dure à base de poly(acide acrylique), de poly(acide maléique), de copolymères acide acrylique/acide maléique, de polyvinylpyrrolidone, de polyvinylimidazole, de copolymères vinylpyrrolidone/vinylimidazole et/ou de copolymères d'acides carboxyliques insaturés et d'oléfines.

3. Concentrés d'antigel selon la revendication 2, contenant en plus du colorant à chaque fois 0,05% à 5% en poids de deux acides carboxyliques différents l'un de l'autre des groupes a) et/ou b) ainsi que 0,05% à 5% en poids d'un ou de plusieurs hétérocycles du groupe e).

4. Concentrés d'antigel selon les revendications 1 à 3 ayant un pH dans la gamme de 4 à 11.

5. Concentrés d'antigel selon les revendications 1 à 4 à base d'éthylèneglycol ou de propylèneglycol ou de mélanges d'alkylèneglycols ou de glycérines avec de l'éthylèneglycol ou du propylèneglycol, qui contiennent à chaque fois au moins 95% en poids d'éthylèneglycol et/ou de propylèneglycol et/ou de glycérine.

6. Procédé de préparation de concentrés d'antigel selon les revendications 1 à 5, **caractérisé en ce que** l'on incorpore le colorant C.I Reactive Violet 5 (Colour Index No. 18097) à raison de 0,0005% à 0,1% en poids, par rapport à la quantité totale du concentré, dans des concentrés d'antigel à base d'alkylèneglycols ou de leurs dérivés ou de glycérine.

7. Compositions aqueuses d'antigel prêtes à l'emploi ayant un point de congélation abaissé, lesquelles comprennent de l'eau et 10% à 90% d'un concentré d'antigel selon les revendications 1 à 5.

8. Utilisation de concentrés d'antigel selon les revendications 1 à 5 pour la préparation de compositions aqueuses d'antigel pour des moteurs à combustion.
